# NEUE EUROPÄISCHE PATENTSCHRIFT

(11) **EP 0 749 678 B2**
(45) Veröffentlichungstag und Bekanntmachung des Hinweises auf die Entscheidung über den Einspruch: **17.07.2002**
(45) Hinweis auf die Patenterteilung: 24.02.1999
(21) Anmeldenummer: 96106891.3
(22) Anmeldetag: 02.05.1996
(51) Int. Cl.: A01C 7/20, A01B 73/02

(54) **Sämaschine**
Sowing machine
Semoir

(30) Priorität: 22.06.1995 DE 19522709
(43) Veröffentlichungstag der Anmeldung: 27.12.1996
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Scheufler, Bernd, Dr. Ing., 49205 Hasbergen (DE)
(74) Vertreter: Grünecker, Kinkeldey, Stockmair & Schwanhäusser Anwaltssozietät

(56) Entgegenhaltungen:
- EP-A- 0 114 983
- EP-A- 0 335 455
- DE-A- 4 326 125
- DE-C- 3 900 724
- US-A- 4 172 537
- US-A- 4 211 288
- PAREYS LANDWIRTSCHAFTSLEXIKON, 1956, SS 3 u. 318

## Beschreibung

Die Erfindung betrifft eine Sämaschine gemäß des Oberbegriffes des Patentanspruches 1.

Eine derartige Sämaschine ist durch die US-PS 42 11 288 bekannt. Bei dieser Sämaschine sind drei als Särahmen ausgebildete Säeinheiten vorgesehen, wobei die beiden seitlichen Särahmen gegenüber dem mittleren Särahmen, bezogen auf die Fahrtrichtung, nach vorn versetzt angeordnet sind. Dieses führt zu einer versetzten Aussaat des Saatgutes am Feldanfang und Feldende des Feldes.

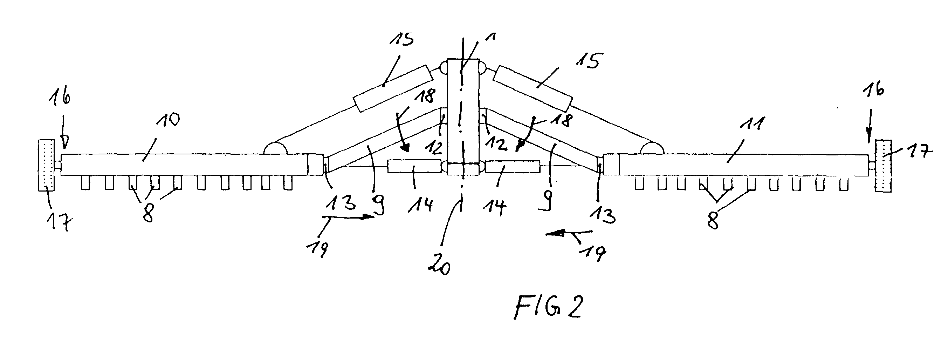

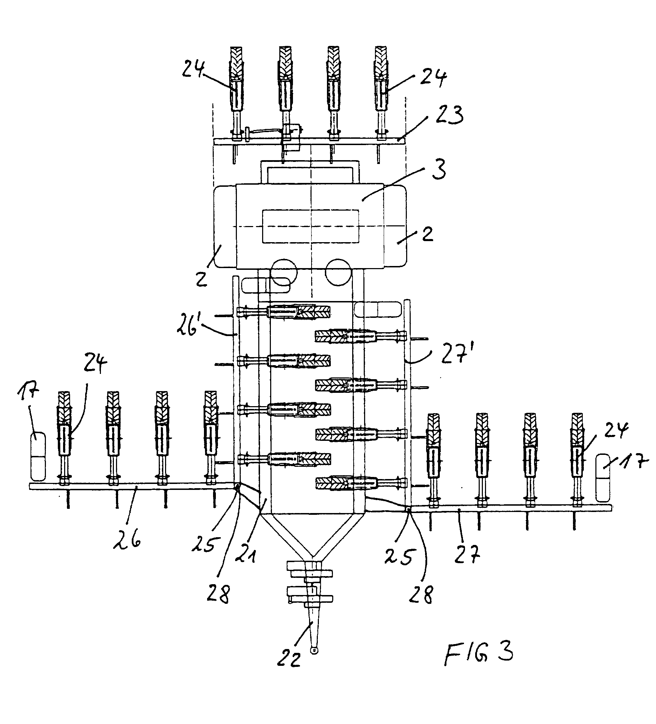

Eine weitere Sämaschine ist beispielsweise durch die DE-OS 43 26 125 bekannt. Bei dieser Sämaschine ist ein Rahmen vorgesehen, der sich über Laufräder auf dem Boden abstützt. Im Bereich zwischen den Laufrädern und am hinteren Ende des Rahmens ist der Vorratsbehälter angeordnet. Vor dem Vorratsbehälter sind an dem Rahmen Särahmen mit Säelementen angeordnet. Unterhalb des Rahmens befindet sich vor dem Vorratsbehälter ein mittlerer Särahmen und seitlich des mittleren Särahmens sind jeweils die seitlichen Särahmen angeordnet. Die seitlichen Särahmen sind gemäß des Ausführungsbeispiels nach Fig.2 und 3 in zwei zueinander klappbare Abschnitte unterteilt, die zum Zwecke des Transportes im Einrollverfahren auf den Rahmen klappbar sind.

Es hat sich nun gezeigt, daß nicht in allen Fällen und für alle Einsatzbereiche, vor allem bei großen Arbeitsbreiten, diese Einklapptechnik ausreichend ist.

Der Erfindung liegt die Aufgabe zugrunde, ein Aussäen des Saatgutes auf einer Linie am Feldende und Feldanfang zu ermöglichen.

Diese Aufgabe wird erfindungsgemäß dadurch gelöst, daß Vorrichtungen vorhanden sind, die gewährleisten, daß zu Beginn bzw. zum Ende einer Arbeitsbahn das Saatgut auf einer Linie über die gesamte Arbeitsbreite zumindest annähernd parallel zu einer zur Fahrtrichtung verlaufenden Arbeitsebene im Boden abgelegt wird.

Hierbei kann vorgesehen sein, daß die Dosiereinrichtung über geeignete Vorrichtungen derart das Saatgut zu den Säelementen an den Särahmen führen, daß zu Beginn einer Arbeitsbahn zunächst den seitlichen Säelementen und zeitlich verzögert den hinteren Säelementen derart zugeführt wird, daß das Saatgut durch die hintere Säelementenreihe erst im Boden abgelegt wird, wenn diese den Anfang der Saatgutablage der vorderen Säelementenreihe erreicht haben, und daß am Ende der Arbeitsbahn zunächst die Saatgutzufuhr zu den seitlichen Säelementen abgeschaltet wird und die Saatgutzufuhr zu den hinteren Säelementen bei Erreichen des Endes der Arbeitsbahn der seitlichen Säelementen abgeschaltet wird.

Hierbei ist in einer Ausführungsform vorgesehen, daß der mittlere Särahmen hinter dem Vorratsbehälter und die seitlichen Särahmen, in Draufsicht gesehen, vor dem Vorratsbehälter angeordnet sind.

In einer Ausführungsform ist vorgesehen, daß die seitlichen Särahmen um senkrechte oder aufrechte Achsen aus der Arbeitsstellung in eine Transportstellung klappbar sind. In einer anderen Ausführungsform ist vorgesehen, daß die seitlichen Särahmen um zumindest annähernd horizontale Achsen aus der Arbeitsstellung in eine aufrechte Transportstellung klappbar sind, und daß die Schwenkachsen derart gewählt sind, daß eine Transportbreite von gleich oder kleiner als 3 m erreichbar ist.

In einer Ausführungsform ist hierzu vorgesehen, daß die Särahmen mittels Gelenken am Rahmen angelenkt sind, und daß die Lage der Schwenkgelenke in Richtung Maschinenmitte beim Einklappen in Transportstellung verlegbar ist.

Weitere Einzelheiten der Erfindung sind den übrigen Unteransprüchen, der Beispielsbeschreibung und den Zeichnungen zu entnehmen. Hierbei zeigen
- Fig. 1: eine Sämaschine in der Draufsicht und in Prinzipdarstellung,
- Fig.2: die Sämaschine in der Vorderansicht, wobei jedoch nur der Rahmen mit den seitlichen Säelementen dargestellt ist, in Prinzipdarstellung,
- Fig.3: eine weitere Sämaschine in der Draufsicht und in Prinzipdarstellung und
- Fig.4: eine weitere Sämaschine in der Draufsicht und in Prinzipdarstellung.

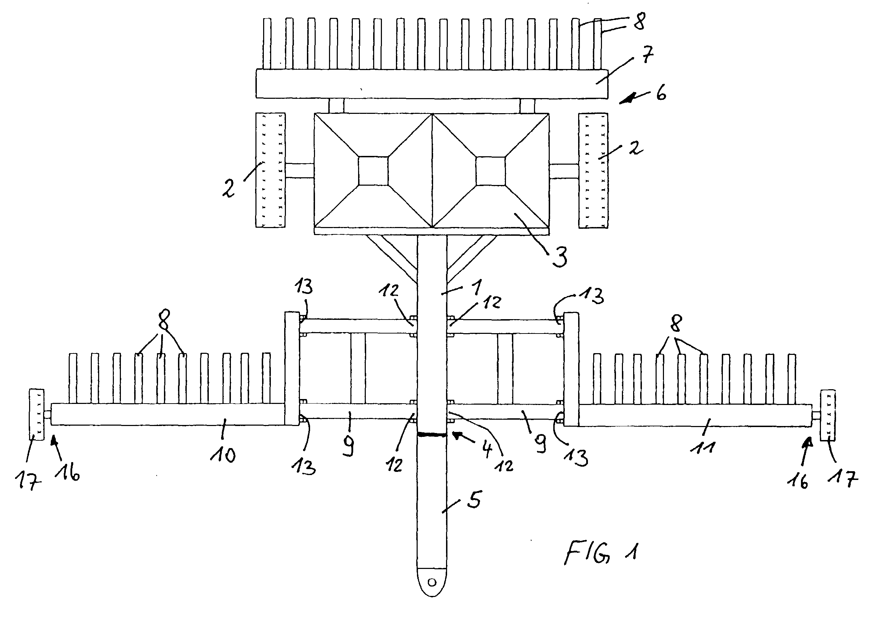

Die Sämaschine gemäß den Fig.1 und 2 weist den Rahmen 1 auf, der sich über die Laufräder 2 auf den Boden abstützt. Zwischen den Laufrädern 2 ist auf dem Rahmen 1 der Vorratsbehälter 3 angeordnet. Die Laufräder 2 sind innerhalb einer maximalen Transportbreite von 3 m angeordnet. An dem Rahmen 1 ist auf der Vorderseite 4 die sich nach vorne erstreckende Zugdeichsel 5 angeordnet. Hinter dem Vorratsbehälter 3 ist im hinteren Bereich 6 der Sämaschine der mittlere Särahmen 7 mit den daran befestigten Säscharen 8 angeordnet. Der Särahmen 7 ist über geeignete, nicht dargestellte Hebemittel in bekannter Weise in eine Arbeitsstellung für die Säschare 7 abzusenken und in eine Transportstellung anzuheben.

Desweiteren sind an dem Rahmen 1 über Schwenkhebel 9 die seitlichen Särahmen 10 und 11 angeordnet. Auf jeder Seite der Sämaschine befindet sich somit ein seitlicher Särahmen 10 bzw. 11 mit daran angeordneten Säscharen 8.

Den Säscharen 8 wird über nicht dargestellte Dosiereinrichtungen und Förder- sowie Verteilorganen das sich im Vorratsbehälter 3 befindliche Material in bekannter und daher nicht näher dargestellter Weise in einstellbaren Mengen zugeführt.

Der mittlere Särahmen 7 ist bzgl. der seitlichen Särahmen 10 und 11 versetzt oder beabstandet zu diesen angeordnet Die seitlichen Särahmen 10 und 11 sind in Draufsicht gesehen vor dem Vorratsbehälter 3 am Rahmen 1 angeordnet.

Zwischen dem Rahmen 1 der Sämaschine und den Särahmen 10 und 11 sind, wie bereits erwähnt, jeweils Schwenkhebel 9 angeordnet. Die Schwenkhebel 9 sind jeweils mittels der Gelenke 12 an dem Rahmen 1 befestigt, während die Särahmen 10 und 11 mittels der Gelenke 13 an den Schwenkhebelrahmen 9 befestigt sind. Zwischen den als Schwenkrahmen 9 ausgebildeten Schwenkhebel und dem Rahmen 1 sind die als Hydraulikzylinder 14 ausgebildeten Hubelemente angeordnet. Desweiteren sind zwischen den seitlichen Särahmen 10 und11 und dem Rahmen 1 der Sämaschine ebenfalls als Hydraulikzylinder 15 ausgebildete Hubelemente angeordnet.
Wenn Material ausgebracht wird, befinden sich die Särahmen in den in Fig.1 und 2 dargestellten Positionen. An den äußeren Enden 16 der seitlichen Särahmen 10 und 11 sind die als Laufräder 17 ausgebildeten Führungselemente angeordnet.

Um die seitlichen Särahmen 10 und 11 der Sämaschine in Transportstellung zu bringen, werden über die Hydraulikzylinder 15 die seitlichen Särahmen 10 und 11 in eine aufrechte Stellung geklappt, wobei gleichzeitig über die Hydraulikzylinder 14 die Schwenkhebel 9 um die Gelenkachse der Gelenke 12 in Pfeilrichtung 18 eingezogen werden. Hierdurch sind die Schwenkgelenke 13 in Richtung 19 der Maschinenmitte 20 beim Einklappen in die Transportstellung verlegbar. Somit wird also erreicht, daß die äußere Breite der Sämaschine in Transportstellung der Särahmen eine max. Breite von 3 m nicht überragt.

An der Sämaschine sind Vorrichtungen vorhanden, die gewährleisten, daß zu Beginn bzw. zum Ende einer Arbeitsbahn das Saatgut über die gesamte Arbeitsbreite zumindest annahernd parallel zu einer zur Fahrtrichtung verlaufenden Arbeitsebene Im Boden abgelegt wird. Hierbei ist der Dosiereinrichtung diese Vorrichtung zugeordnet, so daß gewährleistet ist, daß das Saatgut den Säelementen 8 an den Särahmen 7, 10 und 11 so zugeführt wird, daß zu Beginn einer Arbeitsbahn, zunächst den Säelementen 8 der seitlichen Särahmen 10 und 11, die vor den Säelementen 8 des hinteren Särahmens 7 angeordnet sind, zugeführt wird. und zeitlich verzögert derart den Säelementen 8 des hinteren Särahmens 7 zugeführt wird, daß das Saatgut durch die Säelemente 8 des hinteren Särahmens 7 erst im Boden abgelegt wird, wenn diese den Anfang der Saatgutablage durch die Säelemente der vorderen Särahmen 10 und 11 erreicht haben. Desweiteren werden über die Vorrichtungen die Dosiereinrichtungen derart betätigt, daß am Ende der Arbeitsbahn zunächst die Saatgutzufuhr zu den Säelementen 8 der seitlichen Särahmen 10 und 11 abgeschaltet wird und die Saatgutzufuhr zu den Säelementen 8 des hinteren Särahmens 7 bei Erreichen des Endes der Arbeitsbahnen der Säelemente 7 der seitlichen Särahmen 10 und 11 abgeschaltet wird.

Die Sämaschine gemäß Fig.3 weist den Rahmen 21 auf, der sich über Laufräder 2 auf den Boden abstützt. Zwischen den Laufrädern 2 ist auf dem Rahmen 1 der Vorratsbehälter 3 angeordnet Die Laufräder 2 sind innerhalb einer max. Transportbreite von 3 m angeordnet. An dem Rahmen 21 ist auf der Vorderseite die sich nach vorne erstreckende Zugdeichsel 22 angeordnet. Hinter dem Vorratsbehälter 3 ist im hinteren Bereich der Sämaschine der mittlere Särahmen 23 mit daran befestigten, als Einzelkornsäaggregate ausgebildeten Säelementen 24 angeordnet. Der mittlere Särahmen 23 ist über geeignete, nicht dargestellte Hubmittel in bekannter Weise in eine Arbeitsstellung für die Säaggregate 24 abzusenken und in eine Transportstellung anzuheben.

Desweiteren sind an dem Rahmen 21 mittels der Schwenkgelenke 25 die seitlichen Särahmen 26 und 27 mit den daran angeordneten, als Einzelkornsäaggregate ausgebildeten Säelementen 24 angeordnet. Auf jeder Seite der Sämaschine befindet sich somit ein seitlicher Särahmen 26 bzw. 27 mit daran angeordneten Säelementen 24.

Die Schwenkachsen 28 der Schwenkgelenke 25 verlaufen senkrecht und befinden sich im vorderen Bereich des Rahmens 21.

Der mittlere Särahmen 23 ist bzgl. der seitlichen Särahmen 26 und 27 versetzt zu diesen angeordnet. Die seitlichen Särahmen 26 bzw. 27 sind in Draufsicht gesehen vor dem Vorratsbehälter 3 am dem Rahmen 21 angeordnet.

Zwischen den seitlichen Särahmen 26 bzw. 27 und dem Rahmen 21 sind nicht dargestellte Hydraulikzylinder angeordnet, um die Särahmen 26 und 27 mit den Säelementen 24 aus der in Fig.3 mit dickeren Linien dargestellten Albeitsposition in die mit dünneren Linien dargestellte Transportposition 26' und 27' innerhalb der max. zulassigen Transportbreite von 3 m zu verschwenken.

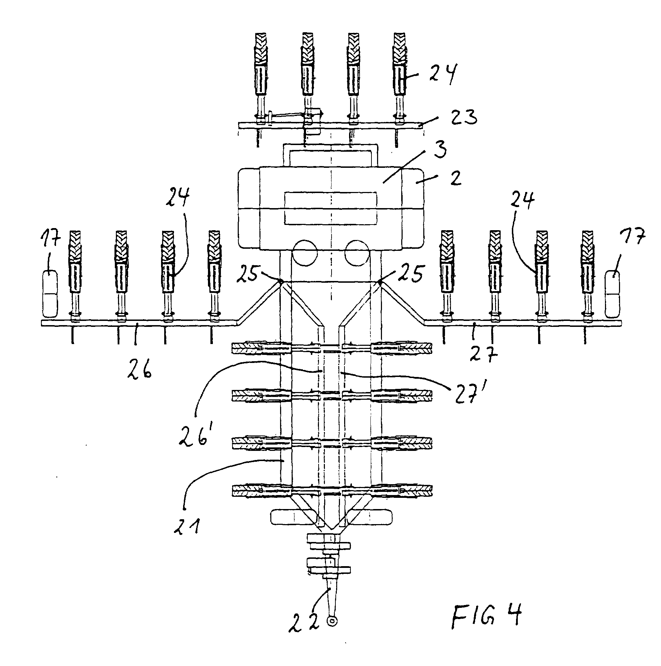

Das Ausführungsbeispiel gemäß Fig.4 unterscheidet sich von dem Ausführungsbeispiel gemäß Fig.3 dadurch, daß sich die Schwenkgelenke 25 im hinteren Teil der Maschine befinden, während sie sich bei der Sämaschine nach Fig.3 im vorderen Bereich befinden.

## Patentansprüche

1. Sämaschine mit einem sich über Laufräder auf dem Boden abstützenden Rahmen, Vorratsbehälter und an Särahmen angeordneten Säelementen, denen das im Vorratsbehälter befindliche Saatgut über Dosierorgane und Saatleitungen in einstellbaren Mengen zugeführt wird, wobei zumindest ein mittlerer Särahmen und jeweils zumindest ein seitlich zu dem mittleren Särahmen angeordneter Särahmen vorgesehen ist, wobei der mittlere Särahmen (7, 23 ) bzgl. den seitlichen Särahmen (10, 11, 26, 27) in Fahrtrichtung versetzt oder beabstandet zu diesen angeordnet ist, **dadurch gekennzeichnet, daß** Vorrichtungen vorhanden sind, die gewährleisten, daß zu Beginn bzw. zum Ende einer Arbeitsbahn das Saatgut auf einer Linie über die gesamte Arbeitsbreite zumindest annähernd parallel zu einer quer zur Fahrtrichtung verlaufenden Arbeitsebene im Boden abgelegt wird.

2. Sämaschine nach Anspruch 1, **dadurch gekennzeichnet, daß** die Dosiereinrichtung über geeignete Vorrichtungen derart das Saatgut den Säelementen (8, 24) an den Särahmen (10, 11, 26, 27 ) zuführen, daß zu Beginn einer Arbeitsbahn zunächst den seitlichen Säelementen und zeitlich verzögert den hinteren Säelementen derart zugeführt wird, daß das Saatgut durch die hintere Säelementenreihe erst im Boden abgelegt wird, wenn diese den Anfang der Saatgutablage der vorderen Säelementenreihe erreicht haben, und daß am Ende der Arbeitsbahn zunächst die Saatgutzufuhr zu den seitlichen Saelementen abgeschaltet wird und die Saatgutzufuhr zu den hinteren Säelementen bei Erreichen des Endes der Arbeitsbahnen der seitlichen Säelementen abgeschaltet wird.

3. Sämaschine nach Anspruch 1, **dadurch gekennzeichnet, daß** der mittlere Särahmen (7,23) hinter dem Vorratsbehälter (3) und die seitlichen Särahmen (10, 11, 26, 27 ) in Draufsicht gesehen vor dem Vorratsbehälter (3) angeordnet sind.

4. Sämaschine nach einem oder mehreren der vorstehenden Ansprüche, **dadurch gekennzeichnet, daß** die seitlichen Särahmen (26, 27 ) um senkrechte oder aufrechte Achsen aus der Arbeitsstellung in eine Transportstellung Klappbar sind.

5. Sämaschine nach einem oder mehreren der vorstehenden Ansprüche, **dadurch gekennzeichnet, daß** die seitlichen Särahmen (10, 11) um zumindest annähernd horizontale Achsen aus der Arbeitsteilung in eine aufrechte Transportstellung klappbar sind, daß die Schwenkachsen derart gewählt sind, daß eine Transportbreite von gleich oder kleiner als 3m erreichbar ist.

6. Sämaschine nach einem oder mehreren der vorstehenden Ansprüche, **dadurch gekennzeichnet daß** die Sarahmen (10, 11) mittels Gelenken am Rahmen (1) gelenkt sind, daß die Lage der Schwenkgelenke (13) in Richtung Maschinenmitte (20 )beim Einklappen in Transportstellung verlegbar ist.

7. Sämaschine nach einem oder mehreren der vorstehenden Ansprüche, **dadurch gekennzeichnet, daß** die Särahmen (10, 11) über einen Schwenkhebel (9) am Rahmen (1) angeordnet sind.

8. Sämaschine nach einem oder mehreren der vorstehenden Ansprüche, **dadurch gekennzeichnet, daß** die seitlichen Särahmen (10,11) mittels Hydraulkzylinder (15) ein- und ausklappbar sind.

## Claims

1. Seed drill having a frame supported on the ground via running wheels, a hopper and sowing elements disposed on sowing frames, to which sowing elements the seed in the hopper are supplied in adjustable quantities via metering members and seeds lines, at least one central sowing frame and respectively at least one sowing frame disposed laterally relative to the central sowing frame being provided, the central sowing frame (7, 23) being disposed in an offset manner relative to the lateral sowing frames (10, 11, 26, 27), when viewed with respect to the direction of travel, or at a spacing from said lateral sowing frames,
**characterised in that**
arrangements are provided which ensure that, at the start or respectively at the end of a working path, the seeds are deposited in the ground in one line over the entire working width at least approximately parallel to a working plane extending transversely relative to the direction of travel.

2. Seed drill according to claim 1,
**characterised in that**
the metering means supply the seeds to the sowing elements (8, 24) on the sowing frames (10, 11, 26, 27) via suitable arrangements so that, at the start of a working path, seeds are supplied initially to the lateral sowing elements and, with a time delay, to the rear sowing elements so that the seeds are only deposited in the ground by the rear row of sowing elements
when the latter has reached the start of the seed depositing of the front row of sowing elements, and **in that** the supply of seeds to the lateral sowing elements is initially switched-off at the end of the working path, and the supply of seeds to the rear sowing elements is switched-off when the end of the working paths of the lateral sowing elements is reached.

3. Seed drill according to claim 1,
**characterised in that**
when viewed from above, the central sowing frame (7, 23) is disposed behind the hopper (3), and the lateral sowing frames (10, 11, 26, 27) are disposed in front of the hopper (3).

4. Seed drill according to one or more of the preceding claims,
**characterised in that**
the lateral sowing frames (26, 27) are pivotable about vertical or upwardly extending axes from the working position into a position of conveyance.

5. Seed drill according to one or more to he preceding claims.
**characterised in that**
the lateral sowing frames (10, 11) are pivotable about axes which are at least approximately horizontal from the working position into an upwardly extending position of conveyance, and **in that** the pivotal axes are so selected that a conveyance width equal to or smaller than 3m is attainable.

6. Seed drill according to one or more of the preceding claims,
**characterised in that**
the sowing frames (10,11) are pivotally mounted on the frame (1) by means of joints, and **in that** the position of the pivot joints (13) is displaceable in the direction of the machine centre (20) during the inwardly pivotal movement into the position of conveyance.

7. Seed drill according to one or more of the preceding claims,
**characterised in that**
the sowing frames (10, 11) are disposed on the frame (1) via a pivotal lever (9).

8. Seed drill according to one or more of the preceding claims,
**characterised in that**
the lateral sowing frames (10, 11) are inwardly and outwardly pivotable by means of hydraulic cylinders (15).

## Revendications

1. Semoir comportant un châssis s'appuyant sur le sol par des roues de roulement, un réservoir d'alimentation et des éléments de semoir équipant le châssis, ces éléments recevant les semences contenues dans le réservoir par l'intermédiaire d'organes de dosage et de conduites de semence, selon des quantités réglables,
avec au moins un châssis central de semoir, et chaque fois au moins un châssis latéral, par rapport au châssis central,
le châssis central (7, 23) ou les châssis latéraux (10, 11, 26, 27) étant écartés ou décalés dans la direction de déplacement par rapport au châssis central,
**caractérisé en ce qu'**
il comporte des dispositifs qui assurent qu'au début ou à la fin d'un trajet de travail, la semence est déposée suivant une ligne sur toute la largeur de travail, dans le sol, au moins sensiblement parallèle à un plan de travail transversal par rapport à la direction de déplacement.

2. Semoir selon la revendication 1,
**caractérisé en ce que**
l'installation de dosage fournit, par des dispositifs appropriés, la semence aux éléments de semoir (8, 24) des châssis de semoir (10, 11, 26, 27),
au début d'un trajet de travail, tout d'abord les éléments de semoir latéraux et, avec retard, les éléments de semoir arrière, sont alimentés de sorte que la semence de la rangée d'éléments de semoir arrière n'est déposée dans le sol que lorsque ces éléments ont atteint le début du dépôt de semence de la rangée d'éléments de semoir avant et
à la fin du trajet de travail, on coupe tout d'abord l'alimentation en semence vers les éléments de semoir latéraux et on coupe l'alimentation en semence des éléments de semoir arrière lorsqu'on atteint l'extrémité des trajectoires de travail des éléments de semoir latéraux.

3. Semoir selon la revendication 1,
**caractérisé en ce que**
le châssis de semoir central (7, 23) se trouve derrière le réservoir (3) et les châssis de semoir latéraux (10, 11, 26, 27) se trouvent en amont du réservoir (3) en vue de dessus.

4. Semoir selon une ou plusieurs des revendications précédentes,
**caractérisé en ce que**
les châssis de semoir latéraux (26, 27) peuvent être basculés de leur position de travail à leur position de transport autour d'axes verticaux ou relevés.

5. Semoir selon une ou plusieurs des revendications précédentes,
**caractérisé en ce que**
les châssis de semoir latéraux (10, 11) peuvent être basculés de leur position de travail à leur position relevée, de transport, autour d'axes au moins sensiblement horizontaux, de manière à atteindre une largeur de transport égale ou inférieure à 3 mètres.

6. Semoir selon une ou plusieurs des revendications précédentes,
**caractérisé en ce que**
les châssis de semoir (10, 11) sont reliés au châssis (1) par des articulations et la position des articulations de pivotement (13) est décalée en direction du milieu de la machine (20) lorsqu'on rabat vers l'intérieur en position de transport.

7. Semoir selon une ou plusieurs des revendications précédentes,
**caractérisé en ce que**
les châssis de semoir (10, 11) sont montés par un levier pivotant (9) sur le châssis (1).

8. Semoir selon une ou plusieurs des revendications précédentes,
**caractérisé en ce que**
les châssis latéraux (10, 11) peuvent être basculés vers l'intérieur ou déployés par des vérins hydrauliques (15).
